# EUROPÄISCHE PATENTSCHRIFT

(11) **EP 2 600 044 B1**
(45) Veröffentlichungstag und Bekanntmachung des Hinweises auf die Patenterteilung: **15.03.2017**
(21) Anmeldenummer: 11191609.4
(22) Anmeldetag: 01.12.2011
(51) Int. Cl.: F16K 27/02, F16K 31/06

(54) **Elektromagnet mit Ventilkörper**
Electromagnet with valve body
Aimant électrique doté d'un corps de soupape

(43) Veröffentlichungstag der Anmeldung: 05.06.2013
(73) Patentinhaber: SVM Schultz Verwaltungs-GmbH & Co. KG, 87700 Memmingen (DE)
(72) Erfinder: Weiß, Johann, 88239 Wangen (DE)
(74) Vertreter: Pfister, Stefan Helmut Ulrich

(56) Entgegenhaltungen:
- EP-A2- 1 048 847
- EP-A2- 1 574 711
- WO-A1-2011/037334
- DE-A1- 4 137 994
- DE-A1- 19 504 185
- DE-A1-102006 042 681
- US-A1- 2001 052 584
- US-B1- 6 453 930

## Beschreibung

Die Erfindung betrifft ein Magnetventil, umfassend einen Elektromagneten mit einer Magnetspule, einem Ankerraum, einem in dem Ankerraum geführten und durch Strombeaufschlagung der Magnetspule bewegbaren Anker und einem Magnetkern sowie eine den Elektromagneten zumindest teilweise umschließende bzw. aufnehmende Hülse und einen Ventilkörper. Bekannte Magnetventile weisen in der Regel ein durchgehendes, den Elektromagneten sowie den Ventilkörper umfassendes Gehäuse auf. In dem Gehäuse befinden sich sowohl die den Ventilkörper bildenden Bestandteile als auch die den Elektromagneten bereitstellenden Teile des Magnetventils. Die Anordnung sämtlicher Magnetbestandteile in einem Gehäuse hat den Nachteil, dass dieses Gehäuse in einem aufwendigen Verfahren gefertigt werden muss. Hier muss zum Beispiel in spanabhebender Bearbeitungsweise ein Gehäuse gebildet werden.

Auch bei der Montage bekannter Magnetventile erschweren die inneren Strukturen den Zusammenbau wesentlich, da während des Einbaus der Bestandteile mehrere Handhabungsschritte durchgeführt werden müssen.

In WO 2011/037334 A1 wird ein Magnetventil offenbart, dessen Gehäuse aus mehreren Teilen besteht. Der Zusammenbau dieses Magnetventils ist aufgrund der verschiedenen Federanordnungen aber aufwändig und kompliziert.

US 2001/0052584 A1 schlägt ein Magnetventil vor, bei dem ebenfalls ein mehrteiliges Gehäuse zum Einsatz kommt. Zur Abdichtung des Ventils ist allerdings ein qualitätskritischer Verpressvorgang notwendig, der erhöhten Aufwand bei der Montage des Ventils bedeutet.

In EP 1574711 A2 wird ein Magnetventil vorgestellt, welches ein mehrteiliges Gehäuse aufweist, wobei hier der Federmechanismus des Ventils in einem weiteren, sich innerhalb des Hauptgehäuses befindlichen Gehäuse untergebracht ist. Die Montage ist deshalb aufwändig und fehleranfällig.

DE 10 2006 042 681 A1 zeigt ein Magnetventil, bei dem ein einteiliges Gehäuse mit dem Ventilteil, welches die Fluidströmung führt, verbunden ist. Die Vorspannung des Ventils ist dabei im Ventilteil, abgewandt von Magnet und Anker angeordnet. Diese Anordnung benötigt Bauraum an Stellen, wo er bei vielen Anwendungen für Magnetventile nicht zur Verfügung steht.

In DE 41 37 994 A1 wird ein Einspritzventil mit speziellem, mehrteiligen Aufbau des Ventilteils offenbart. Nachteilig an diesem Vorschlag ist die hohe Anzahl der benötigten Einzelteile, die einen aufwändigen Zusammenbau des Ventils mit sich bringt.

Neben dem komplizierten Aufbau erweisen sich die Kosten für Herstellung und Montage somit als weiterer Nachteil bekannter Magnetventile.

Aufgabe der vorliegenden Erfindung ist es daher, ein Magnetventil zur Verfügung zu stellen, das kostengünstig hergestellt werden kann.

Diese Aufgabe wird gelöst durch ein wie eingangs beschriebenes Magnetventil. Im erfindungsgemäßen Magnetventil ist vorgesehen, dass der Ventilkörper wenigstens zweiteilig ausgebildet ist. Ein erster Ventilkörperteil ist dabei innerhalb der den Elektromagneten zumindest teilweise umschließenden bzw. aufnehmenden Hülse gehalten, während ein mit dem ersten Ventilkörperteil verbindbarer zweiter Ventilkörperteil vorgesehen ist, der außerhalb der Hülse angeordnet ist, wobei eine mit dem Anker zusammenwirkende Ankerfeder vorgesehen ist und sich die Ankerfeder auf dem in der Hülse angeordneten ersten Ventilteil abstützt.

Die Kombination aus erstem Ventilkörperteil und zweitem Ventilkörperteil bildet dabei den Ventilkörper und stellt gleichzeitig ein Ventilgehäuse zur Verfügung.

Die im Magnetventil gleichwohl vorgesehene Hülse dient beim erfindungsgemäßen Magnetventil dazu, die Bestandteile des Elektromagneten, das heißt, die Wicklungen elektrisch leitfähigen Drahtes tragende Magnetspule, den Anker sowie den Magnetkern aufzunehmen. Zusätzlich wird in die Hülse ein erster Ventilkörperteil eingesetzt. Aufgrund des Wegfalls des in die Hülse eingeformten Ventilkörperteiles bzw. Ventilkörpergehäuses kann die Hülse in einfacher Art und Weise in bekannten Verfahren beispielsweise durch Tiefziehen hergestellt werden. Hierdurch werden die Herstellungskosten für das erfindungsgemäße Magnetventil wesentlich gesenkt. Als weiterer Vorteil ergibt sich, dass das erfindungsgemäße Magnetventil darüber hinaus wesentlich schneller und in weniger Einzelschritten montiert werden kann. In der Hülse sind hierzu entsprechende Führungen für die Positionierung und Führung der Magnetventilteile vorgesehen. Aufgrund des außerhalb der Hülse angeordneten und mit dem ersten verbindbaren zweiten Ventilkörperteils kann hier des Weiteren auf einfache Art und Weise während des Verbindens von erstem und zweitem Ventilkörperteil eine Justierung des Magnetventils durchgeführt werden. Hierdurch kann die Präzision des Magnetventils weiter verbessert werden.

Als vorteilhaft erweist sich, wenn der erste Ventilkörperteil einen gegenüber der Hülse axial vorstehenden Ventilteilabschnitt aufweist. Dieser Ventilteilabschnitt stellt einen Sitz für den zweiten Ventilkörperteil zur Verfügung bzw. wird im montierten Zustand teilweise vom zweiten Ventilkörperteil umgriffen oder aber umgreift den zweiten Ventilkörperteil. Durch Anordnung einer Verbindungsschicht an der Kontaktstelle zwischen erstem und zweitem Ventilkörperteil kann eine dauerhafte, feste und dichte Verbindung zwischen den Ventilkörperteilen gebildet werden.

Alternativ besteht die Möglichkeit, dass im ersten, in der Hül-se angeordneten Ventilkörperteil ein Aufnahmebereich vorgesehen ist, der mit einem am zweiten Ventilkörperteil vorstehenden Ventilkörperabschnitt in Eingriff bringbar ist. Hierbei wird der zweite Ventilkörperteil in die Hülse und den darin liegenden ersten Ventilkörperteil eingesteckt bzw. eingeführt und dort festgelegt. Eine derartige Festlegung kann beispielsweise durch eine Steckverbindung, eine Rast-, Schnapp- oder Schraubverbindung zur Verfügung gestellt werden. Darüber hinaus kann zusätzlich oder alternativ die feste und dauerhaft dichte Verbindung zwischen den Ventilkörperteilen auch im vorliegenden Fall durch eine an der Kontaktstelle zwischen erstem und zweitem Ventilkörperteil angebrachte Verbindungsschicht hergestellt werden.

Die Magnetspule stellt günstigerweise einen Ankerraum zur Verfügung bzw. bildet oder umschließt diesen, wobei in dem Ankerraum ein Magnetanker gelagert und geführt ist und durch Strombeaufschlagung der Magnetspule bzw. des dort vorgesehenen elektrisch leitfähigen Drahtes und des sich in der Folge ausbildenden Magnetfeldes bewegbar angeordnet ist. Der Magnetanker durchragt im montierten Zustand den ersten Ventilkörperteil und steht mit seinem axialen Ende in den zweiten Ventilkörperteil ein, um hier entweder unmittelbar oder über ein Dichtelement einen Abschluss von im Ventil vorgesehenen Öffnungen bzw. Düsen zu bewirken.

Als günstig wird angesehen, wenn zwischen dem ersten und zweiten Ventilkörperteil wenigstens ein mediensteuerndes Dichtelement vorgesehen ist. Dieses, bevorzugt aus einem elastischen Material gebildete, Dichtelement ist mit dem in den Ventilkörper einstehenden Anker in Wirkverbindung bringbar. Hierzu liegt das axiale Ende des Ankers auf dem Dichtelement auf oder steht in dieses ein, ohne jedoch zwingend mit diesem mechanisch, das heißt form-, stoff- oder kraftschlüssig mit diesem verbunden zu sein. Durch Bewegung des Ankers wird dann eine Betätigung des Dichtelementes und damit die Funktionalisierung des Ventils durchgeführt.

Als vorteilhaft wird angesehen, wenn das Dichtelement durch ein eine Rückstellkraft zur Verfügung stellendes Federelement aufschlagbar ist. So kann beispielsweise im bestromten Zustand des Elektromagneten der Anker in den Magnetkern zurückgezogen werden, woraufhin die Rückstellkraft des Federelementes das Dichtelement aus einer dichtenden in eine öffnende Position verbringt und beispielsweise einen Zulauf oder eine Düse im Ventil freigibt.

In einer weiteren Ausführungsform besteht die Möglichkeit, dass das Dichtelement dazu verwendet wird, zwei im Ventilkörper angeordnete Öffnungen bzw. Düsen abzudichten. Während das Dichtelement von dem Anker in eine erste Dichtposition gedrückt wird, wirkt die dem Dichtelement zugeordnete Feder bzw. das Federelement aufgrund der zur Verfügung gestellten Rückstellkraft eine Verschiebung des Dichtelementes in eine zweite Dichtposition, sobald der Anker beispielsweise durch das vom Elektromagneten aufgebaute Magnetfeld.zurückgezogen bzw. vom Dichtelement abgehoben wird.

Nach Abfall der Strombeaufschlagung fällt der Anker in seine Ausgangsposition zurück, wirkt über das Dichtelement auf den Zulauf bzw. die Düse und verschließt diese. Alternativ hierzu besteht selbstverständlich auch die Möglichkeit, dass durch Betätigung des Ankers der Zulauf bzw. die Düse verschlossen wird, indem das Dichtelement - vermittelt über den Anker - auf die entsprechende Öffnung aufgedrückt oder aufgepresst wird. Das Federelement stellt eine Rückstellkraft zur Verfügung, so dass das Dichtelement zwischen zwei Schaltzuständen verschoben bzw. in zwei Dichtstellungen gebracht werden kann.

Als günstig wird angesehen, wenn der zweite Ventilkörperteil an seinem Umfang eine Abstützfläche für das Dichtelement oder das Federelement aufweist. Auf diese Art und Weise kann das Dichtelement bzw. das dieses aufnehmende, haltende oder tragende Federelement in dem zweiten Ventilkörperteil eingesetzt werden. Das Federelement bzw. das Dichtelement liegt dann auf der Abstützfläche auf und wird beim Aufsetzen bzw. Verbinden des zweiten Ventilkörperteils mit dem ersten Ventilköperteil durch die Ventilkörperteile in dieser Lage positioniert.

Die Abstützfläche ist dabei günstiger Weise als am Innenumfang des zweiten Ventilkörperteils angeordnete Schulter oder als ganz oder teilweise umlaufender Absatz ausgebildet. Ein entsprechender Absatz oder eine Schulter kann bei der Ausformung des Ventilkörperteils in dieses eingebracht oder nachträglich eingeschnitten oder eingeformt werden.

Eine bevorzugte Ausführungsform der Erfindung sieht vor, dass sich das Federelement an dem Dichtelement abstützt bzw. das Dichtelement in das Federelement einsteht. Daneben oder zusätzlich erweist es sich als vorteilhaft, wenn das Federelement fest mit dem Dichtelement verbunden, insbesondere mit diesem verklebt, verschweißt oder auch in das Dichtelement auf- oder einvulkanisiert ist. Es wird somit ein stabiles Verbundelement aus Feder- und Dichtelement zur Verfügung gestellt. Dieses kann bei der Montage des erfindungsgemäßen Magnetventils und aufgrund der inneren Formgebung der Ventilkörperteile in einfacher Art und Weise in den Ventilkörper eingelegt und in seiner Lage fixiert werden.

Erfindungsgemäß ist vorgesehen, dass der erste Ventilkörperteil beziehungsweise der bezüglich der Hülse vorstehende Ventilteilabschnitt mit dem zweiten Ventilkörperteil dauerhaft dicht und fest verbunden ist. Diese Verbindung wird bevorzugt über eine Verbindungsschicht realisiert. Die Verbindungsschicht kann beispielsweise gebildet werden, indem die Ventilkörperteile miteinander verklebt oder verschweißt werden. Sie ist als Klebeoder Schweißschicht realisierbar. Zusätzlich oder alternativ besteht die Möglichkeit, dass erster und zweiter Ventilkörperteil miteinander verpresst sind. Eine Justierung der Position des zweiten Ventilkörperteils relativ zum ersten Ventilkörperteil findet vor dem dauerhaft dichten und festen Verbinden der Ventilkörperteile statt. Die Ventilkörperteile weisen dabei geeignete Toleranzen auf, sodass eine Übergangs- oder Presspassung ausgebildet wird. Die Ventilkörperteile werden somit bereits beim Fügen lagepositioniert. Die Anordnung bzw. der Auftrag einer Verbindungsschicht fixiert und dichtet die Verbindung (sowohl bei der mechanischen Verpressung wie auch wenn die Verbindungsschicht als Klebe- oder Schweißschicht ausgebilet ist) ab.

Das erfindungsgemäße Magnetventil ist derart ausgebildet, dass der erste Ventilteil in das Innere der Hülse eingesetzt und in der Hülse derart gehalten ist, dass ein Ventilteilabschnitt gegenüber der Hülse axial vorsteht und der zweite Ventilteil von außen auf den vorstehenden Ventilteilabschnitt aufgesetzt und fest mit dem ersten Ventilteil verbunden ist. Die feste und dauerhaft dichte Verbindung zwischen erstem und zweiten Ventilteil bzw. Ventilteilabschnitt ist dabei insbesondere über eine Verbindungsschicht realisiert. Durch das Zusammenwirken von erstem und zweitem Ventilteil wird hierbei ein Ventilgehäuse zur Verfügung gestellt. Das heißt, dass das Ventilgehäuse nicht in der Hülse vorgesehen bzw. in oder an diese an- bzw. eingeformt werden muss. Somit kann eine standardisierte Hülsenform verwendet werden, die sich lediglich für die Aufnahme des ersten Ventilteils eignen muss. Sämtliche weiteren Konfigurationen und Ausgestaltungen des Ventilkörpers bzw. Ventilgehäuses werden dann durch Formgebung in den Ventilteilen, die sich zum Ventilgehäuse ergänzen bzw. die das Ventilgehäuse mit ausbilden, realisiert. Dies erlaubt die einfache und schnelle Bauartanpassung unter Verwendung weitgehend standardisierter Baugruppen.

Im erfindungsgemäßen Magnetventil ist eine mit dem Anker zusammenwirkende Ankerfeder vorgesehen. Für die der Ankerfeder stellt der in der Hülse angeordnete Ventilteil eine geeignete Fläche zur Verfügung. Die Positionierung des Ankers bzw. des Verbunds aus Anker und Ankerfeder im Magnetventil, das heißt, in der Hülse, wird somit wesentlich verbessert. Gleichzeitig ergeben sich hierbei Vorteile bei der Montage des Magnetventils, da nach Einsetzen des ersten Ventilteils in der Hülse eine geeignete Fläche für die Abstützung der Ankerfeder zur Verfügung steht.

Die Ankerfeder und zusätzlich oder alternativ auch das im Ventilkörper vorgesehene, das Dichtelement tragende bzw. aufweisende Federelement ist bevorzugt als Mäander-, Teller- oder Schraubenfeder ausgebildet. Es kann so bei geringer Bauhöhe eine für die Rückstellung des Ankers ausreichende Federkraft zur Verfügung gestellt werden. Dies erlaubt insgesamt einen miniaturisierten bzw. platzsparenden Aufbau des erfindungsgemäßen Magnetventils bzw. Ventilkörpers. Als vorteilhaft wird in diesem Zusammenhang angesehen, wenn die Rückstellkräfte der beiden verwendeten Federn bzw. Federelemente gegenläufig gerichtet wirken.

Die den Elektromagneten sowie den ersten Ventilteil beinhaltende Hülse weist im Anordnungsbereich des ersten Ventilkörperteils eine Durchmesserverengung auf. Diese Durchmesserverengung bewirkt eine nahezu spielfreie Positionierung des ersten Ventilkörpers und stellt eine Führung bei der Montage des Magnetventils zur Verfügung. Durch die vorgenannte Ausführung der Hülse wird die Montage des Magnetventils wesentlich vereinfacht und kann mit wenigen Montage- bzw. Handhabungsschritten durchgeführt werden. Ebenfalls durch die Hülse zur Verfügung gestellt wird eine radial zum Hülseninneren hin verlaufende Halterung. Bevorzugt befindet sich die Halterung am Hülsenende, insbesondere bevorzugt auf der Hülsenseite mit der Duchmesserverengung.

Diese dient als innere Anlagefläche für den ersten Ventilkörperteil. Die Halterung kann beispielsweise als Abkantung, Umfaltung oder Umbiegung des Hülsenbodens bereits beim Herstellen bzw. Tiefziehen der Hülse in dieser vorgesehen werden. Daneben besteht selbstverständlich auch die Möglichkeit, dass die Halterung als umlaufender Rand oder als Abkantung im Bereich des dem Ventilkörper zugewandten Endes der Hülse ausgebildet ist. Auch eine derartige Ausgestaltung lässt sich bereits beim Tiefziehen der Hülse in diese einformen bzw. an oder in dieser anordnen. Neben den vorgenannten Ausführungs- bzw. Herstellungsvarianten für die Halterung kann eine Halterung auch durch die Anordnung von einer oder mehreren Zungen, Nasen oder Biegeteilen ausgeführt werden. Die Halterung muss nicht zwangsläufig am gesamten Umfang der Hülse bzw. des Hülsenbodens vorgesehen werden. Um eine ausreichende Stabilisierung der Position des Ventilkörperteils in der Hülse zu gewährleisten, reicht beispielsweise eine einzige Zunge oder ein sonstiges Biegeteil aus. Die Halterung kann somit beispielsweise auch durch nachträgliche Einschnitte in der Mantelfläche der Hülse gebildet werden. Die Halterung ist bevorzugt am Hülsenende vorgesehen, ohne die Erfindung hierauf zu beschränken. Sie kann auch vom Hülsenende beabstandet vorgesehen sein. Die endseitige Anordnung erlaubt eine einseitige (und daher kostengünstige) Montage der Bauteile in die Hülse, wobei die Halterung sicherstellt, dass die Einbauteile nicht aus der Hülse herausfallen.

Als vorteilhaft wird angesehen, wenn ein dichtes Ventilgehäuse durch die Umfangsflächen der Ventilkörperteile zur Verfügung gestellt ist. Die Umfangsflächen der einzelnen Ventilkörperteile ergänzen sich dabei bei bzw. nach Verbinden zum eigentlichen Ventilgehäuse bzw. zu dem an die Hülse anschließenden Ventilgehäuse. Vorteilhaft hierbei ist es, dass ein Ventilgehäuse nicht in die Hülse bzw. den das Magnetventil bildenden Körper eingeformt werden muss. Stattdessen kann durch geeignete Formgebung der Ventilkörperteile hier eine Konfiguration bzw. Formgebung des Ventilgehäuses vorgenommen werden. Hierdurch wird die Variabilität der herstellbaren Magnetventile wesentlich erhöht und die Herstellung insgesamt vereinfacht. Neben verringerten Herstellungskosten wird so auch eine Materialeinsparung sowie eine Reduzierung von Bearbeitungsschritten an der Hülse realisiert.

Somit kann ein standardisiertes Hülsenselement zur Verfügung gestellt werden, das durch geeignete Kombination der Ventilkörperteile eine Vielzahl verschiedener Magnetventile trägt beziehungsweise ausbildet.

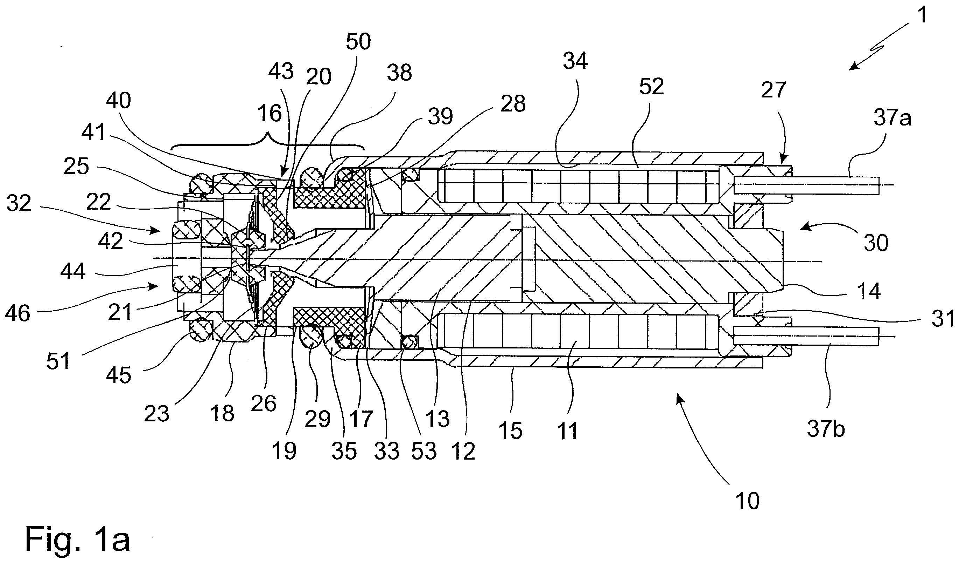

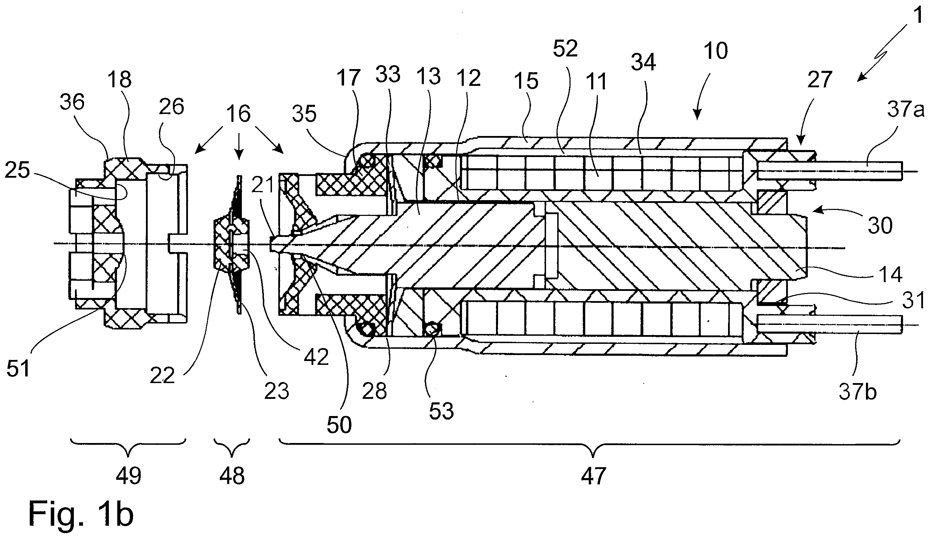

In der Zeichnung ist die Erfindung insbesondere in einem Ausführungsbeispiel schematisch dargestellt. Es zeigt: Fig. 1a eine bevorzugte Ausführungsform des erfindungsgemäßen Magnetventils im montierten Zustand, Fig. 1b eine bevorzugte Ausführungsform des erfindungsgemäßen Magnetventils im teilweise montierten Zustand, jeweils in Schnittdarstellung.

In den Figuren sind gleiche oder einander entsprechende Elemen-te jeweils mit den gleichen Bezugszeichen bezeichnet und werden daher, sofern nicht zweckmäßig, nicht erneut beschrieben.

Fig. 1a zeigt ein Magnetventil 1. Dieses umfasst eine Hülse 15, in der ein Elektromagnet 10 angeordnet ist. Der Elektromagnet 10 weist eine Magnetspule 11 auf. Diese trägt Wicklungen eines elektrisch leitfähigen Drahtes. Durch Strombeaufschlagung der Magnetspule 11 bildet sich im Elektromagneten 10 ein Magnetfeld aus, das einen im Ankerraum 12 bewegbar angeordneten Anker 13 betätigt. Der Elektromagnet 10 weist zudem einen in der Magnetspule 11 angeordneten Magnetkern 14 auf. Die zuvor beschriebenen Funktionsteile des Elektromagneten 10 sind sämtlich in der Hülse 15 angeordnet bzw. von dieser umschlossen oder umgriffen. Die Strombeaufschlagung des Elektromagneten 10 erfolgt über die Anschlüsse 37a, b. An die Hülse 15 schließt sich im in Fig. 1a linken Bereich ein Ventilkörper 16 an. Die Hülse 15 ist derart ausgebildet, dass diese eine Halterung 35 für einen ersten Ventilkörperteil 17 zur Verfügung stellt. Die Hülse 15 als solche wird insbesondere als Tiefziehteil zur Verfügung gestellt. Die Halterung 35 wird somit bereits bei Herstellung der Hülse 15 in diese eingeformt oder eingebracht.

Im Innern der Hülse 15 schließt sich an die Funktionsteile des Elektromagneten 10 (von rechts nach links) ein erster Ventilkörperteil 17 an. Dieser ist innerhalb der Hülse 15 angeordnet und überragt deren axiales Ende, beziehungsweise den Hülsenboden 38. Alternativ besteht die Möglichkeit, dass der erste Ventilkörperteil 17 in der Hülse 15 aufgenommen ist, diese jedoch nicht überragt. Der erste Ventilkörperteil 17 stellt dann einen Aufnahmebereich (nicht dargestellt) zur Verfügung, in den ein vorspringender bzw. vorstehender Abschnitt des zweiten Ventilkörperteils 18 eingesetzt bzw. formschlüssig verbunden wird. Der zweite Ventilkörperteil 18 wird hierfür beispielsweise dann in die Hülse bzw. den dann angeordneten ersten Ventilkörperteil 17 eingesteckt, eingeschraubt, eingeklebt oder in sonstiger Art und Weise kraft- bzw. formschlüssig eingebracht. Die Hülse 15 weist einen in Fig. 1a nach unten offenen Hülsenboden 38 auf. Durch die im Bereich des Hülsenbodens 38 gebildete Halterung 35 kann das erste Ventilkörperteil 17 nicht aus der Hülse 15 herausfallen und wird durch die Halterung 35 in seiner Position im Magnetventil 1 festgelegt. Um beispielsweise Fertigungstoleranzen der Hülse 15 aus- zugleichen und den Ventilkörper 16 gegenüber dem Ankerraum 12 bzw. im Hülseninneren 34 zusätzlich abzudichten, wird im Bereich der Halterung 35 zusätzlich ein O-Ring 39 als Dichtmittel eingesetzt. Bei Einsetzen des ersten Ventilteils 17 in der Hülse 15 wird der O-Ring 39 gegen die Halterung 35 bzw. eine diese bildende Abkantung der Hülse 15 gepresst und dichtet hier ab.

Wie in Fig. 1a dargestellt, ergibt sich aus der Anordnung des ersten Ventilkörpers 17 in der Hülse 15 ein die Hülse 15 überragender Ventilteilabschnitt 19. Dieser steht gegenüber der Hülse 15 vor und dient im dargestellten Ausführungsbeispiel zur Verbindung des ersten Ventilkörperteils 17 mit dem zweiten Ventilkörperteil 18. Der zweite Ventilkörperteil 18 wird auf den vorstehenden Ventilteilabschnitt 19 aufgesetzt, bzw. aufgesteckt oder aufgepresst. Durch Auswahl geeigneter Toleranzen in den Bauteilen kann hier eine entsprechende Passung zur Verfügung gestellt werden, die ein Fügen der Ventilkörperteile 17, 18 erlaubt. Um den Ventilkörper 16 als solches zu komplettieren, wird an der Kontaktstelle 43 zwischen erstem und zweitem Ventilkörperteil 17, 18 eine Verbindungsschicht 40 aufgebracht. Hierbei kann es sich beispielsweise um eine Klebeschicht, eine Verschweißung oder sonstige Schicht handeln, die die zwischen erstem und zweitem Ventilkörperteil 17, 18 bestehende Fuge 41 überdeckt oder verschließt und somit den Ventilkörper 16 abdichtet und die beiden Ventilkörperteile 17, 18 dauerhaft und dicht miteinander verbindet. Nach Verbindung von erstem und zweitem Ventilkörperteil 17, 18 wird hier ein Ventilgehäuse 32 gebildet. Das Ventilgehäuse 32 ist nicht Bestandteil der Hülse 15, sondern wird unabhängig von dieser zur Verfügung gestellt beziehungsweise gebildet.

Der im Hülseninneren 34 angeordnete erste Ventilkörperteil 17 stellt einerseits einen Ventilteilabschnitt 19 für die Anordnung des zweiten Ventilkörperteils 18 zur Verfügung, andererseits bildet der erste Ventilkörperteil 17 an seinem dem Elektromagneten 10 zugewandten Ende einen Absatz 28 zur Verfügung, der als Auflage für eine Ankerfeder 33 dient. Diese beispielsweise als Mäander- oder Tellerfeder ausgebildete Feder steht mit dem Anker 13 in Wirkverbindung und beaufschlagt diesen mit einer Rückstellkraft, beispielsweise bei Abfallen des Ankers 13 vom Elektromagneten 10. Die Ankerfeder 33 wird zusätzlich durch den ebenfalls in der Hülse 15 aufgenommenen Elektromagneten 10 bzw. den Körper der Magnetspule 11 fixiert.

Bei der Montage des Magnetventils 1 wird zunächst die Hülse 15 zur Verfügung gestellt. In diese wird das erste Ventilkörperteil 17, gegebenenfalls nach Anordnung des O-Ringes 39 am Hülsenboden 38 eingesetzt. Um die Montage zu vereinfachen, weist die Hülse 15 eine Verjüngung des Durchmessers in dem Bereich auf, in dem der erste Ventilkörperteil 17 eingesetzt wird. Nach dem Anordnen des ersten Ventilkörperteils 17 werden die übrigen Funktionsteile des Elektromagneten 10 ebenfalls in die Hülse 15 eingesetzt. In dem Ankerraum 12 wird der Anker 13 eingefügt und der Ankerraum 12 dann durch den ebenfalls in den Körper der Magnetspule 11 eingesetzten Magnetkern 14 verschlossen. Der Magnetkern 14 wird dabei beispielsweise in die Magnetspule 11 eingepresst und anschließend durch ein Fixiermittel 30 - im Ausführungsbeispiel eine Scheibe 31 - in seiner Position festgelegt.

Nach Bildung der ersten Baugruppe 47 mit erstem Ventilkörperteil 17 wird an den die Hülse 15 überragenden Ventilteilabschnitt 19 das zweite Ventilkörperteil 18 angesetzt bzw. die erste Baugruppe 47 in den zweiten Ventilkörperteil 18 eingepresst oder eingesteckt. Vor der Montage kann auf den Ventilteilabschnitt 19 zusätzlich eine Ventilkörperdichtung 29 aufgesteckt oder aufgebracht werden, die bei der nachfolgenden Verwendung des Magnetventils 11 eine unter Umständen vorgesehene Aufnahme für das Magnetventil 1 gegenüber diesem abdichtet.

Vor der Verbindung von Ventilteilabschnitt 19 und zweitem Ventilkörperteil 18 wird in dieses ein mit einem Federelement 23 versehenes Dichtelement 22 eingesetzt. Dieses Dichtelement 22 weist eine Ausnehmung 42 auf, in die das axiale Ende 21 des Ankers 13 einsteht. Das axiale Ende 21 steht mit dem Dichtelement 22 jedoch nur in Wirkverbindung, das heißt, ist nicht mechanisch mit diesem verbunden. Das Federelement 23 weist eine Vorspannung auf bzw. stellt eine Rückstellkraft zur Verfügung, die einen sicheren Verschluss einer oberen Düse 50 bei angezogenem Anker 13 sicherstellt. Der Anker 13 weist hierbei einen Ankerüberhub auf, das heißt, der Anker 13 löst sich im angezogenen Zustand vom Dichtelement 22.

Das vorgespannte Federelement drückt dann das Dichtelement 22 in den oberen Dichtsitz. Durch Anziehen des Ankers 13 wird gleichzeitig mit der Entspannung des Federelementes 23 die Ankerfeder 33 gespannt. Nach Abfallen des Ankers, beispielsweise bei Beendigung der Strombeaufschlagung des Elektromagneten 10, wird durch den Anker 13 - vermittelt durch die Rückstellkraft der Ankerfeder 33 - das Dichtelement 22 entgegen der Rückstellkraft des Federelementes 23 in einen weiteren Dichtsitz eindrücken und damit eine weitere, untere Düse 51 verschlossen. Die beiden Dichtpositionen des Dichtelementes 22 bewirken eine Steuerung der Medienströme. Während in einer ersten Dichtposition, das heißt, bei Aufsitzen des Dichtelementes 22 auf der unteren Düse 51 der Zulauf 44 geschlossen wird, wird gleichzeitig die obere Düse 50 freigegeben, so dass in den Ventilkörper 16 einströmendes Medium über einen Überlauf 43 abgeleitet werden kann. Wird der Anker 13 angezogen, löst sich das axiale Ende 21 vom Dichtelement 22 und das vorgespannte Federelement 23 bewirkt, unter Umständen unterstützt durch das einströmende Medium, ein Andrücken des Dichtelementes 22 an die obere Düse 50, die dadurch verschlossen wird. Das einströmende Medium kann somit über den Zulauf 44 zu einem Verbraucher gelangen.

Das Dichtelement 22 ist federnd im Ventilkörper 16 gelagert. Hierzu ist ein Federelement 23 vorgesehen, das im Ausführungsbeispiel der Fig. 1a und 1b das Dichtelement 22 beinhaltet bzw. dauerhaft mit diesem verbunden ist. Eine Verbindung wird beispielsweise durch Verkleben oder Verpressen von Dichtelement 22 und Federelement 23 realisiert. Alternativ hierzu kann, beispielsweise, wenn das Dichtelement 22 aus einem elastischen Material gebildet ist, das Dichtelement 22 auf das Federelement 23 aufvulkanisiert werden. Das Federelement 23 ist, wie auch die Ankerfeder 33 als Mäander-, Teller- oder Scheibenfeder ausgebildet. Diese Ausgestaltung erlaubt eine geringe Bauhöhe bei Zurverfügungstellung von ausreichender Federkraft für die Rückstellung des Ankers 13 bzw. des Dichtelementes 22. Das Federelement 23 erstreckt sich radial vom Dichtelement 22 weg in Richtung der Umfangsfläche 36 des zweiten Ventilkörperteils 18. Dieses verfügt über eine Abstützfläche 25, auf der der äußere Rand des Federelementes 23 im montierten Zustand des Ventilkörpers 26 aufliegt Der Abstützfläche 25 gegenüberliegend ist das Federelement 23 bzw. dessen Rand in einer formkomplementären Ausnehmung des ersten Ventilkörperteils 17 aufgenommen und wird somit nach Fügen von erstem und zweitem Ventilkörperteil 17, 18 in seiner Position fixiert. Während des Fügens von erstem und zweiten Ventilkörperteil 17, 18 wird eine Justierung des Magnetventils 1 durchgeführt. Nach deren Abschluss wird die Kontaktstelle von erstem und zweitem Ventilkörperteil 17, 18 mit einer Verbindungsschicht 40 versehen. Diese kann beispielsweise durch Auftrag eines Klebemittels gebildet werden. Darüber hinaus besteht selbstverständlich auch die Möglichkeit, dass erster und zweiter Ventilkörperteil 17, 18 miteinander verschweißt oder verlötet werden, um hier eine dauerhafte und dichte Verbindung zu gewährleisten. Die Ventilkörperteile 17, 18 sind zum Beispiel stoffgleich oder aus unterschiedlichen Materialien geschaffen. Sie bestehen vorzugsweise aus Kunststoff, thermoplastischem Kunststoff oder Metall, zum Beispiel Aluminium oder Stahl.

In dem zweiten Ventilkörperteil 18 eingeformt befinden sich die Zu- bzw. Abläufe für mit dem Magnetventil 1 zu steuernden Medien und die durch das Dichtelement 22 je nach Dichtstellung zu verschließende obere Düse 50 bzw. untere Düse 51. Ein zentraler Zulauf 44 bzw. die diesem zugeordnete Düse 51 wird durch das Dichtelement 22 verschlossen und das Dichtelement 22 von Medium umströmt. Durch die freigegebene obere Düse 51 kann das Medium in einen Überlauf 43 bzw. einen Rücklaufkanal abfließen. Nach Strombeaufschlagung des Elektromagneten 10 löst sich der Anker 13 vom Dichtelement. In Verbindung mit der Beaufschlagung des Dichtelementes 22 durch das Federelement 23 wird dieses aus dem unteren Dichtsitz an der unteren Düse 51 gehoben und gegen die obere Düse 50 gedrückt. Eine zusätzliche Beaufschlagung durch das in den Ventilkörper einströmende und an das Dichtelement 22 anströmende Medium drückt das Dichtelement 22 in den oberen Dichtsitz an der oberen Düse 50, so dass diese verschlossen wird.

Der Anker 13 bzw. dessen axiales Ende 21 steht in den ersten Ventilkörperteil 17 ein, überragt diesen und steht im Ausführungsbeispiel der Fig. 1a mit dem Dichtelement 22 in Eingriff und Wirkverbindung. Eine kraft- oder stoffschlüssige Verbindung von Dichtelement 22 und Anker 13 ist dabei jedoch nicht gegeben, da aufgrund eines Ankerüberhubes ein Lösen des axialen Endes 21 des Ankers vom Dichtelement 22 vorgesehen ist.

Vorteilhaft bei dem in Fig. 1a dargestellten Magnetventil 1 ist es, dass ein Ventilgehäuse 32 durch die Ventilkörperteile 17, 18 selbst gebildet wird und ein entsprechender Gehäuseteil nicht an der Hülse 15 vorgesehen werden muss. Dies erlaubt neben einer einfacheren Montage zusätzlich eine erhöhte Variabilität bezüglich der Ausgestaltung des eigentlichen Ventilkörpers 16, der über den Elektromagneten 10 bzw. den von diesem betätigten Anker 13 betätigt wird. Um bei der Anordnung des Magnetventils beispielsweise in einem Ventilblock eine verbesserte Abdichtung zu realisieren, wird neben der Ventilkörperdichtung 29 eine weitere ringförmige Sitzdichtung 45 am in Fig. 1a unteren Ende 46 des Ventilkörpers 16 angeordnet, um hier einen fluiddichten Anschluss des Magnetventils 1 zu ermöglichen.

Die Hülse 15 weist in ihrem unteren Bereich eine Verjüngung auf. Hieraus ergibt sich im oberen Bereich ein zwischen dem Elektromagneten 10 und der Hülse 15 gebildeter Spalt 52. Dieser vereinfacht wesentlich die Montage des Ventils und verhindert gleichzeitig eine zu starke mechanische Beaufschlagung der beiden im Bereich des ersten Ventilkörperteils 17 vorgesehenen Dichtungen 53 und 39. Aufgrund des Spaltes 52 können die Dichtungen 53, 39 bei Einstecken in die Hülse 15 zunächst ohne Berührung mit der Hülse 15 in dieser geführt werden. Die Dichtungen 53, 39 werden erst durch den verjüngten Bereich der Hülse 15 in ihre letztendliche Dichtungsposition gedrückt und dichten dabei den Ventilkörper 16 gegenüber dem Elektromagneten 10 in der Hülse 15 ab. Es wird so durch die Dichtungen 53, 39 verhindert, dass Medium in den Bereich des Elektromagneten 10 bzw. in die Hülse 15 eindringt.

Fig. 1b stellt das im Zusammenhang mit Fig. 1a beschriebene Magnetventil 1 in teilmontiertem Zustand dar. Erkennbar sind die einzelnen Baugruppen des Magnetventils 1. Zum einen die erste Baugruppe 47, die gebildet ist aus der Hülse 15, in der der erste Ventilkörperteil 17 sowie die Funktionselemente des Elektromagneten 10 angeordnet sind. Nach Montage der ersten Baugruppe 47 wird eine weitere, zweite Baugruppe 48 zur Verfügung gestellt. Diese umfasst zum einen das Dichtelement 22, zum anderen das mit dem Dichtelement 22 verbundene Federelement 23. Die zweite Baugruppe 48 wird bei der Montage in die dritte Baugruppe 49, die durch das zweite Ventilkörperteil 18 zur Verfügung gestellt wird, eingesetzt. Im nachfolgenden Fügevorgang wird der aus zweiter und dritter Baugruppe 48, 49 gebildete Teil des Magnetventils 1 mit der ersten Baugruppe 47 verbunden bzw. gefügt. Hierdurch wird dann das Magnetventil 1 mit einem bedarfsorientiert ausgebildeten Ventilkörper 16, der durch entsprechende Kombination von Ventilkörperteilen 17, 18 funktionalisiert werden kann, gebildet. Während die erste Baugruppe 47 in hoher Stückzahl kostengünstig und in einfacher Bauweise zur Verfügung gestellt werden kann, kann die letztendliche Funktionalisierung des Magnetventils 1 über den zweiten Ventilkörperteil 18 erfolgen.
Gattungsgemäße elektromagnetisch betätigbare Ventile, oftmals auch als Magnetventil bezeichnet, sind im Stand der Technik hinlänglich bekannt. Sie dienen zur Steuerung eines Medienflusses, zum Beispiel als Hydraulik- oder Pneumatikventil. Es sind hierzu die unterschiedlichsten Bauformen bekannt, zum Beispiel 2/2-Wegeventile oder 3/2-Wegeventile, die sowohl als Schaltventile, als auch als Proportionalventile realisiert sind.

## Patentansprüche

1. Magnetventil, umfassend
- einen Elektromagneten (10) mit einer Magnetspule (11), einem durch Strombeaufschlagung der Magnetspule (11) bewegbaren Anker (13) und einem Magnetkern (14),
- eine den Elektromagneten (10) zumindest teilweise umschließende bzw. aufnehmende Hülse (15),
- einen wenigstens zweiteiligen Ventilkörper (16) mit einem innerhalb der Hülse (15) gehaltenen ersten Ventilkörperteil (17) und einem mit dem ersten Ventilkörperteil (17) außerhalb der Hülse (15) verbindbaren zweiten Ventilkörperteil (18), **dadurch gekennzeichnet, dass** eine mit dem Anker (13) zusammenwirkende Ankerfeder (33) vorgesehen ist und sich die Ankerfeder (33) auf dem in der Hülse (15) angeordneten ersten Ventilkörperteil (17) abstützt.

2. Magnetventil nach Anspruch 1, **dadurch gekennzeichnet, dass** der erste Ventilkörperteil (17) einen gegenüber der Hülse (15) axial vorstehenden Ventilteilabschnitt (19) aufweist, wobei der Ventilteilabschnitt (19) einen Sitz (20) für den zweiten Ventilkörperteil (18) zur Verfügung stellt oder der erste Ventilkörperteil (17) einen insbesondere innerhalb der Hülse angeordneten Aufnahmebereich und der zweite Ventilkörperteil (18) einen vorstehenden Ventilkörperabschnitt aufweist, wobei der vorstehende Ventilkörperabschnitt des zweiten Ventilkörperteils (18) mit dem Aufnahmebereich des ersten Ventilkörperteils (17) formschlüssig in Eingriff bringbar ist.

3. Magnetventil nach Anspruch 1 oder 2, **dadurch gekennzeichnet, dass** der zweite Ventilkörperteil (18) lösbar fest mit dem ersten Ventilkörperteil (17) bzw. dem Ventilteilabschnitt (19) verbindbar ist.

4. Magnetventil nach einem der vorhergehenden Ansprüche **dadurch gekennzeichnet, dass** der Anker (13) den ersten Ventilkörperteil (17) durchragt und mit seinem axialen Ende (21) in den zweiten Ventilkörperteil (18) einsteht.

5. Magnetventil nach einem der vorhergehenden Ansprüche **dadurch gekennzeichnet, dass** zwischen erstem und zweitem Ventilkörperteil (17, 18) wenigstens ein mediensteuerndes, insbesondere aus einem elastischen Material gebildetes Dichtelement (22) vorgesehen ist und das Dichtelement (22) mit dem Anker (13) in Wirkverbindung bringbar ist und/oder der Anker (13) in das Dichtelement (22) zumindest teilweise einsteht.

6. Magnetventil nach Anspruch 5, **dadurch gekennzeichnet, dass** das Dichtelement (22) durch ein eine Rückstellkraft zur Verfügung stellendes Federelement (23) beaufschlagbar ist.

7. Magnetventil nach Anspruch 5 oder 6, **dadurch gekennzeichnet, dass** der zweite Ventilkörperteil (18) an Umfang (24) eine Abstützfläche (25) für das Dichtelement (22) oder das Federelement (23) aufweist, insbesondere wobei die Abstützfläche (25) als am Innenumfang (26) des zweiten Ventilkörperteils (18) angeordnete Schulter oder als umlaufender Absatz (28) ausgebildet ist und/oder das Federelement (23) sich an dem Dichtelement (22) abstützt und/oder das Dichtelement (22) in das Federelement (23) einsteht.

8. Magnetventil nach einem der vorhergehenden Ansprüche, **dadurch gekennzeichnet, dass** das Federelement (23) fest mit dem Dichtelement (22) verbunden, insbesondere mit diesem verklebt, verschweißt oder auf das Dichtelement (22) aufvulkanisiert ist.

9. Magnetventil nach einem der vorhergehenden Ansprüche, **dadurch gekennzeichnet, dass** der erste Ventilkörperteil (17) bzw. der vorstehende Ventilteilabschnitt (19) mit dem zweiten Ventilkörperteil (18) dauerhaft dicht und fest verbunden, insbesondere verklebt, verschweißt oder verpresst ist, wobei eine Justierung der Position des zweiten Ventilkörperteils (18) relativ zum ersten Ventilkörperteil (17) vor dem Verbinden vorgesehen ist.

10. Magnetventil nach einem der vorhergehenden Ansprüche, **dadurch gekennzeichnet, dass** der erste Ventilteil (17) in das Innere der Hülse (15) eingesetzt und in der Hülse (15) derart gehalten ist, dass ein Ventilteilabschnitt (19) gegenüber der Hülse (15) axial vorsteht und der zweite Ventilteil (19) von außen auf den vorstehenden Ventilteilabschnitt (19) aufgesetzt und insbesondere über eine Verbindungsschicht fest mit dem ersten Ventilteil (17) verbunden ist, insbesondere wobei ein Ventilgehäuse (32) durch ein Zusammenwirken von erstem und zweitem Ventilteil (18) zur Verfügung gestellt wird.

11. Magnetventil nach einem der vorhergehenden Ansprüche, **dadurch gekennzeichnet, dass** die Ankerfeder (33) als Mäander-, Teller- oder Schraubenfeder ausgebildet ist.

12. Magnetventil nach einem der vorhergehenden Ansprüche 6 bis 11, **dadurch gekennzeichnet, dass** das Federelement (23) als Mäander-, Teller oder Schraubenfeder ausgebildet ist.

13. Magnetventil nach einem der vorhergehenden Ansprüche, **dadurch gekennzeichnet, dass** die Hülse (15) im Anordnungsbereich des ersten Ventilkörperteils (17) eine Durchmesserverengung aufweist, wobei die Durchmesserverengung bei der Montage des Magnetventils (1) eine Führung für das erste Ventilkörperteil (17) zur Verfügung stellt und/oder die Hülse (15) eine radial zum Hülseninneren (34) hin verlaufende Halterung (35) aufweist und die Halterung (35) als innere Anlagefläche für den ersten Ventilkörperteil (17) vorgesehen ist.

14. Magnetventil nach einem der vorhergehenden Ansprüche, **dadurch gekennzeichnet, dass** ein dichtes Ventilgehäuse durch die Umfangsflächen (36) der Ventilkörperteile (17,18) zur Verfügung gestellt ist.

15. Magnetventil nach einem der vorhergehenden Ansprüche, **dadurch gekennzeichnet, dass** der Elektromagnet (10) einen insbesondere von der Magnetspule (11) gebildeten oder umschlossenen Ankerraum (12) aufweist, insbesondere wobei der Anker (13) in dem Ankerraum (12) gelagert und/oder geführt ist.

## Claims

1. A magnetic valve comprising:
- an electromagnet (10) with a magnetic coil (11), an armature (13) movable by exposing the magnetic coil (11) to current, and a magnetic core (14),
- a sleeve (15) at least partly encircling or holding the electromagnet (10),
- an at least two-piece valve body (16) with a first valve body piece (17) held within the sleeve (15), and a second valve piece (18) connectable with the first valve body piece (17) outside the sleeve (15),
**characterized in that** an armature spring (33) interacting with the armature (13) is provided, and the armature spring (33) is supported on the first valve body piece (17) arranged in the sleeve (15).

2. The magnetic valve according to claim 1, **characterized in that** the first valve body piece (17) is provided with a valve piece section (19) projecting axially over the sleeve (15), wherein the valve piece section (19) offers a seat (20) for the second valve body piece (18), or the first valve body piece (17) has a holding area, arranged in particular within the sleeve, and the second valve body piece (18) shows a projecting valve body section, wherein the projecting valve body section of the second valve body piece (18) is engageable positively in the holding area of the first valve body piece (17).

3. The magnetic valve according to claim 1 or 2, **characterized in that** the second valve body piece (18) is connected detachably attached with the first valve body piece (17) or the valve piece section (19).

4. The magnetic valve according to one of the preceding claims, **characterized in that** the armature (13) extends through the first valve body piece (17), and its axial end (21) projects in the second valve body piece (18).

5. The magnetic valve according to one of the preceding claims, **characterized in that** between first and second valve body piece (17, 18) at least one media-controlling sealing element (22) made in particular from elastic material is provided, and the sealing element (22) can operatively be connected with the armature (13), and/or the armature (13) projects at least partly in the sealing element (22).

6. The magnetic valve according to claim 5, **characterized in that** the sealing element (22) is impingeable by a spring element (23) providing a restoring force.

7. The magnetic valve according to claim 5 or 6, **characterized in that** the circumference (24) of the second valve body piece (18) shows a support surface (25) for the sealing element (22) or the spring element (23), wherein in particular the support surface (25) is designed as shoulder or circumferential edge (28) arranged at the interior circumference (26) of the second valve body piece (18), and/or the spring element (23) is supported on the sealing element (22), and/or the sealing element (22) projects in the spring element (23).

8. The magnetic valve according to one of the preceding claims, **characterized in that** the spring element (23) is connected permanently with the sealing element (22), in particular glued, welded or vulcanized to the sealing element (22).

9. The magnetic valve according to one of the preceding claims, **characterized in that** the first valve body piece (17) or the projecting valve piece section (19) is permanently sealingly and tightly connected with the second valve body piece (18), in particular glued, welded or pressed-on, wherein an adjustment of the position of the second valve body piece (18) relatively to the first valve body piece (17) is provided prior to joining.

10. The magnetic valve according to one of the preceding claims, **characterized in that** the first valve piece (17) is introduced in the interior of the sleeve (15) and held there such that one valve piece section (19) projects axially over the sleeve (15), and the second valve piece (19) is put from outside on the projecting valve piece section (19), and in particular a connection layer is joined permanently to the first valve piece (17), wherein in particular a valve housing (32) is provided by interaction of first and second valve piece (18).

11. The magnetic valve according to one of the preceding claims, **characterized in that** the armature spring (33) is configured as meander spring, plate spring, or coil spring.

12. The magnetic valve according to one of the preceding claims 6 to 11, **characterized in that** the spring element is configured as meander spring, plate spring, or coil spring.

13. The magnetic valve according to one of the preceding claims, **characterized in that** the sleeve (15) in the area where the first valve body piece (17) is arranged shows a constriction of the circumference, wherein the constriction of the circumference provides a guide for the first valve body piece (17), while the magnetic valve (1) is assembled, and/or the sleeve (15) shows a mount (35) extending radially to the interior (34) of the sleeve, and the mount (35) is provided as inner contact surface for the first valve body piece (17).

14. The magnetic valve according to one of the preceding claims, **characterized in that** the circumference surfaces (36) of the valve body pieces (17, 18) provide a sealed valve housing.

15. The magnetic valve according to one of the preceding claims, **characterized in that** the electromagnet (10) has an armature chamber (12) formed or encircled in particular by the magnetic coil (11), wherein in particular the armature (13) is mounted and/or guided in the armature chamber (12).

## Revendications

1. Aimant électrique doté d'un corps de soupape comportant :
- un électro-aimant (10) comprenant une bobine d'électro-aimant (11), un induit (13) pouvant être déplacé par injection de courant dans la bobine d'électro-aimant (11) et un noyau d'aimant (14),
- une douille (15) qui entoure ou supporte au moins partiellement l'aimant électrique
- un corps de soupape formé d'au moins deux parties (16), comportant une première partie du corps de soupape (17) maintenue à l'intérieur de la douille (15) et une deuxième partie du corps de soupape (18) pouvant être liée à l'extérieur de la douille (15) à la première partie du corps de soupape (17), **caractérisé en ce qu'**un ressort d'induit (33) interagissant avec l'induit (13) est prévu de façon à ce que le ressort d'induit (33) appuie sur la première partie du corps de soupape (17) située à l'intérieur de la douille (15).

2. Aimant électrique doté d'un corps de soupape selon la revendication 1, **caractérisé en ce que** la première partie du corps de soupape (17) comporte une section partielle du corps de soupape (19) axialement débordante de la douille (15) configurée comme siège (20) destiné à la deuxième partie du corps de soupape (18) ou **en ce que** la première partie du corps de soupape (17) possède une zone d'accueil située en particulier à l'intérieur de la douille et la deuxième partie du corps de soupape (18) possède une section du corps de soupape débordante et agencée de façon à ce que la section débordante de la deuxième partie du corps de soupape (18) peut créer un lien sans jeu avec la zone d'accueil de la première partie du corps de soupape (17).

3. Aimant électrique doté d'un corps de soupape selon la revendication 1 ou 2, **caractérisé en ce que** la deuxième partie du corps de soupape (18) peut être fixée de façon rigide et amovible à la première partie du corps de soupape (17) ou à la section partielle du corps de soupape (19).

4. Aimant électrique doté d'un corps de soupape selon une des revendications précédentes, **caractérisé en ce que** l'induit (13) traverse la première partie du corps de soupape (17) et se prolonge avec son extrémité axiale (21) dans la deuxième partie du corps de soupape (18).

5. Aimant électrique doté d'un corps de soupape selon une des revendications précédentes, **caractérisé en ce qu'**au moins un élément d'étanchéité (22) en matériau élastique et fonctionnant comme régulateur de fluide est prévu entre la première et la deuxième partie du corps de soupape (17,18) et **en ce que** l'élément d'étanchéité (22) peut être mis en interaction active avec l'induit (13) et/ou **en ce qu'**au moins une partie de l'induit (13) est située à l'intérieur de l'élément d'étanchéité (22).

6. Aimant électrique doté d'un corps de soupape selon la revendication 5, **caractérisé en ce que** l'élément d'étanchéité (22) peut être soumis à une force de rappel produite par un élément de ressort (23).

7. Aimant électrique doté d'un corps de soupape selon la revendication 5 ou 6, **caractérisé en ce que** la deuxième partie du corps de soupape (18) possède au niveau de sa circonférence (24) une surface d'appui (25) pour l'élément d'étanchéité (22) ou pour l'élément ressort (23) et en particulier une surface d'appui (25) située au niveau de la circonférence intérieure (26) de la deuxième partie du corps de soupape (18) et configurée comme un épaulement ou un décrochement sur toute la périphérie (28) et/ou **en ce que** l'élément de ressort (23) appuie contre l'élément d'étanchéité (22) et/ou **en ce que** l'élément d'étanchéité (22) déborde à l'intérieur de l'élément de ressort (23).

8. Aimant électrique doté d'un corps de soupape selon une des revendications précédentes, **caractérisé en ce que** l'élément de ressort (23) est fixé de façon rigide à l'élément d'étanchéité (22) et en particulier via de la colle, une soudure ou une vulcanisation.

9. Aimant électrique doté d'un corps de soupape selon une des revendications précédentes, **caractérisé en ce que** la première partie du corps de soupape (17) ou la section partielle du corps de soupape protubérante (19) est assemblée avec la deuxième partie du corps de soupape (18) de façon permanente, étanche et rigide et en particulier par de la colle, une soudure ou par déformation sous pression avec un ajustement de la position de la deuxième partie du corps de soupape (18) par rapport à la première partie du corps de soupape (17) effectué avant l'assemblage permanente.

10. Aimant électrique doté d'un corps de soupape selon une des revendications précédentes, **caractérisé en ce que** la première partie du corps de soupape (17) est introduite à l'intérieur de la douille (15) et maintenue à l'intérieur de la douille (15) de façon à ce qu'une section partielle du corps de soupape (19) saillisse en direction axiale de la douille (15) et la deuxième partie du corps de soupape (18) soit enfichée de l'extérieur sur la section partielle protubérante du corps de soupape (19) et, en particulier, fixée à l'aide d'une couche liante de façon rigide à la première partie du corps de soupape (17), créant ainsi un boitier de soupape (32) par l'interaction de la première et de la deuxième partie du corps de soupape.

11. Aimant électrique doté d'un corps de soupape selon une des revendications précédentes, **caractérisé en ce que** le ressort d'induit (33) est configuré comme un ressort à méandres, un ressort plat ou un ressort hélicoïdal.

12. Aimant électrique doté d'un corps de soupape selon une des revendications 6 à 11, **caractérisé en ce que** le l'élément de ressort (23) est configuré comme un ressort à méandres, un ressort plat ou un ressort hélicoïdal.

13. Aimant électrique doté d'un corps de soupape selon une des revendications précédentes, **caractérisé en ce que** la douille (15) possède au niveau de la première partie du corps de soupape (17) une réduction du diamètre qui représente un guidage pour la première partie du corps de soupape (17) lors du montage de l'aimant électrique (1) et/ou **en ce que** la douille (15) possède une fixation (35) s'étendant radialement vers l'intérieur (34) de la douille (15) et **en ce que** cette fixation (35) sert comme surface d'appui intérieure à la première partie du corps de soupape (17).

14. Aimant électrique doté d'un corps de soupape selon une des revendications précédentes, **caractérisé en ce qu'**un boitier de soupape étanche (36) est créé par les surfaces de circonférence (36) des deux parties du corps de soupape (17, 18).

15. Aimant électrique doté d'un corps de soupape selon une des revendications précédentes, **caractérisé en ce que** l'aimant électrique (10) possède un espace d'induit (12) constitué ou fermé en particulier par la bobine d'électro-aimant (11) avec, en particulier, l'induit (13) maintenu et/ou guidé à l'intérieur de cet espace d'induit (12).
